# EUROPEAN PATENT APPLICATION

(11) **EP 3 321 154 A1**
(43) Date of publication of application: **16.05.2018**
(21) Application number: 16198275.6
(22) Date of filing: 10.11.2016
(51) Int. Cl.: B62J 1/06, B62J 1/08

(54) **SEAT POST ASSEMBLY AND BICYCLE WITH A SEAT POST ASSEMBLY**

(71) Applicant: Ritchey Design, Inc., Sparks, NV 89434 (US)
(72) Inventor: Ritchey, Thomas W., Woodside, CA 94062 (US)
(74) Representative: Schlimme, Wolfram

(57) **Abstract**

A seat post assembly adapted to couple a seat (16) to a bicycle frame (10), wherein the seat post assembly (2) comprises a first seat post member (20) having a lower end portion (20") designed to be inserted into a seat post receptacle (14) of said bicycle frame (10), a second seat post member (22) having an upper end portion (22') designed to be secured to and support said seat (16), a damping member (24) disposed between said first seat post member (20) and said second seat post member (22); wherein said first and second seat post members (20, 22) together with said damping member (24) define a seat post (18) with a seat mounting section (18') comprising the upper end portion (22') of said second seat post member (22) and a frame mounting section (18") comprising the lower end portion (20") of said first seat post member (20) are characterized in that said second seat post member (22) is disposed laterally to at least a section of said first seat post member (20) and has a lower end portion (22") which extends into the frame mounting section (18") designed to be inserted into said seat post receptacle (14) of said bicycle frame (10).

## Description

### TECHNICAL FIELD OF THE INVENTION

The present invention relates to a seat post assembly adapted to couple a seat to a bicycle frame according to the preamble of claim 1. The invention is further directed to a bicycle with such a seat post assembly and to a method of manufacturing such a seat post assembly.

### BACKGROUND OF THE INVENTION

Classic seat posts are rigid components which transmit forces and shocks undamped from the bicycle frame to the seat. This may be disadvantageous for the spine of a person riding a bicycle over an uneven driving surface, in particular like in mountain biking or in cross country biking, but also in traditional road biking. Although some kinds of bicycles are provided with suspension forks or rear wheel suspension, these components remarkably increase a bicycle's complexity and weight and are thus not appropriate for lightweight competition bicycles. Thus, there have been attempts to design seat posts which are able to suppress or absorb shocks.

### DESCRIPTION OF THE PRIOR ART

DE 10 2011 018 560 B4 shows and describes a lightweight seat support for a bicycle comprising two seat post members, a front seat post member and a rear seat post member which are separate and spaced apart from each other when mounted in the seat tube of a bicycle frame. The front seat post member is rigidly connected to the seat and the rear seat post member is in contact with a damping element which is also connected to the front seat post member. This damping element is a damping bushing provided in the region of the seat mount.

US 2011/0210231 A1 discloses a bicycle seat with a resilient support member wherein the seat support comprises two cantilevered springs mounted with one end thereof to an elbow joint of a seat post and with the other end thereof to a seat engagement member. The two cantilevered springs form said resilient support member.

US 7 125 030 B2 shows and describes a bicycle seat post assembly with a vibration isolating member. This vibration isolating member is shown as a tubular damping member made of an elastomeric material. It is disposed radially between an outer seat post tube mounted in a seat tube of a bicycle frame and an inner seat post tube mounted to a seat. A radially outwardly projecting collar at the upper end of said tubular damping member keeps the upper seat post tube and the lower seat post tube spaced apart from another in an axial direction of said seat post assembly.

US 4 934 724 A shows and describes a beam seat support extending substantially horizontally. The beam seat support forms a sandwich beam construction comprising an upper support member and a lower support member with a shock absorbing material inbetween. The seat is mounted to this beam seat support at a free end thereof so that the weight of a person sitting on the seat generates a bending moment in the sandwich beam construction which acts as a suspension like a multiple-leaf spring. This seat support member does not mount the seat to a seat tube of a bicycle frame.

US 2012/0032414 A1 discloses a seat post for a bicycle seat, said seat post having two separate seat post members which are clamped together in the seat tube of a bicycle frame and which are independently mounted to the seat. As this seat post assembly comprises two independent pieces it is difficult to mount it to a seat and a frame and to adjust the seat.

### SUMMARY OF THE INVENTION

It is an object of the present invention to provide a seat post assembly as defined in the preamble of claim 1 which has a reliable damping capacity without increasing the weight of the seat post assembly.

This object is achieved by a seat post assembly with the features of claim 1.

In the seat post assembly according to the present invention, said second seat post member is disposed laterally to at least a section of said first seat post member and has a lower end portion which extends into the frame mounting section designed to be inserted into said seat post receptacle of said bicycle frame.

### ADVANTAGES OF THE INVENTION

The seat post assembly according to the invention is a designed to be mounted in the traditional manner to a seat tube of a bicycle frame and forms a single unit sandwich construction integrating an intermediate isoelastic material layer between two rigid seat post members which can be composed for example of a carbon fiber compound material. The two seat post members can move independently to a certain extent allowing a greater deflection under load compared with a classic seat post of a single solid structure, thus increasing the comfort of the bicycle rider. Due to this increased deflection capability, the seat post assembly according to the invention has thus a better shock absorption capability under loading than the classic seat post of a single solid structure.

Further preferred and advantageous features of the seat post assembly according to the invention are claimed in subclaims 2 to 12.

In a preferred embodiment of the invention which can be combined with other embodiments disclosed herein said first seat post member is provided with a flattened face side facing to said second seat post member in a region of said first seat post member where said first seat post member and said second seat post member are mounted together with said damping member inbetween.

It is advantageous when said flattened face side longitudinally extends from a first face side of the seat post at the frame mounting section to an opposite second face side of the seat post at the upper end portion of the first seat post member.

Preferably said flattened face side comprises an outwardly protruding central rib portion substantially along the longitudinal extension of said flattened face side.

In a preferred embodiment thereof said damping member is provided at a first face side thereof facing to said flattened face side of said first seat post member with a central recess designed to accommodate the central rib portion when said first seat post member, said second seat post member, and said damping member are mounted together.

It is particularly advantageous when said second seat post member is provided with a flattened face side facing to said first seat post member in a region of said second seat post member where said second seat post member and said first seat post member are mounted together with said damping member inbetween.

In another preferred embodiment of the invention which can be combined with other embodiments disclosed in this description said first seat post member is at least in a portion of its longitudinal extension of tubular cross section defined by a circumferential wall enclosing a hollow space.

Preferably the lower end portion of said first seat post member is of tubular cross section.

In a preferred embodiment thereof, a center portion of said first seat post member is of tubular cross section.

In still another preferred embodiment of the present invention which can be combined with other embodiments disclosed herein said first seat post member and/or said second seat post member comprise or are made of a fiber-reinforced composite.

Preferably said fiber-reinforced composite comprises glass fibers and/or carbon fibers bound together in a resin matrix.

In still another preferred embodiment of the invention which also can be combined with other embodiments disclosed in this description or in the claims the upper end of the frame mounting section of the seat post is marked by a marking provided on the seat post above the lower end of the second seat post member.

The present invention is also directed to a bicycle comprising a seat post assembly according to the present invention, wherein said frame mounting section of said seat post is completely accommodated within said seat post receptacle formed at the upper end portion of the seat tube of said bicycle frame so that the lower end portion of said second seat post member terminates inside said seat post receptacle of said seat tube.

In a preferred embodiment of this bicycle a marking is provided on the seat post above the lower end of the second seat post member, wherein said seat post does not extend with said marking out of the seat post receptacle of the seat tube.

It is also an object of the present invention to provide a method of manufacturing a seat post member according to the invention. This object is solved by the method claimed in claim 15.

This inventive method of manufacturing such a seat post assembly comprises the steps of:
(a) molding said first seat post member (20) and said second seat post member (22) as separate fiber reinforced polymer parts, in particular carbon fiber reinforced polymer parts, preferably by compression molding;
(b) positioning said molded first seat post member (20) and said molded second seat post member (22) with said damping member (24) of viscoelastic material inbetween as a preformed package in a curing fixture and
(c) curing said preformed package in an oven in order to activate the polymer and to create a chemical bond between the first seat post member (20), the damping member (24) and the second seat post member (22).

In an alternative inventive method vacuum molding can be used in step (a) instead of compression molding.

According to a further alternative inventive method, injection molded carbon reinforced nylon can be used for mass production of the seat post assembly, wherein an injection molding step is carried out in an alternative first manufacturing step instead of compression molding in step (a).

Preferred embodiments and features of the present invention will be apparent from the following description taken in conjunction with the accompanying drawings in which like reference symbols and numerals designate the same or similar parts.

### BRIEF DESCRIPTION OF THE DRAWINGS

- Fig. 1: is a bicycle provided with a seat post assembly according to the invention;
- Fig. 2: shows a seat post assembly according to the invention in an exploded side view;
- Fig. 3: is a perspective view of the seat post assembly of Fig. 2 in a state in which the members are mounted together;
- Fig. 4: shows a side view of the seat post assembly of Fig. 3 mounted with the lower end portion thereof in a seat tube of a bicycle; and
- Fig. 4A: is a cross-section along line A-A in Fig. 4.

### DETAILED DESCRIPTION OF PREFERRED EMBODIMENTS OF THE INVENTION

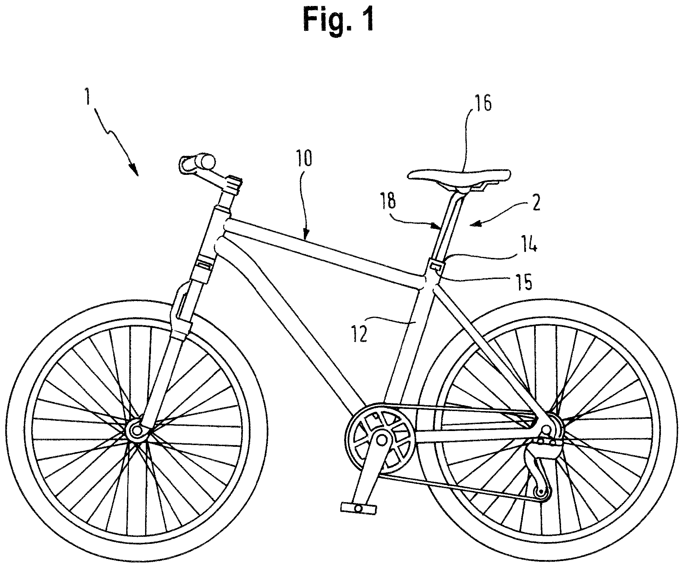

Fig. 1 shows a bicycle 1 with a bicycle frame 10 comprising a seat tube 12. The upper open end of the seat tube 12 forms a seat post receptacle 14 into which a seat post 18 can be inserted and fixed thereto with a commonly known seat post clamping mechanism 15. A seat 16 is mounted in a commonly known manner at the upper free end of seat post 18.

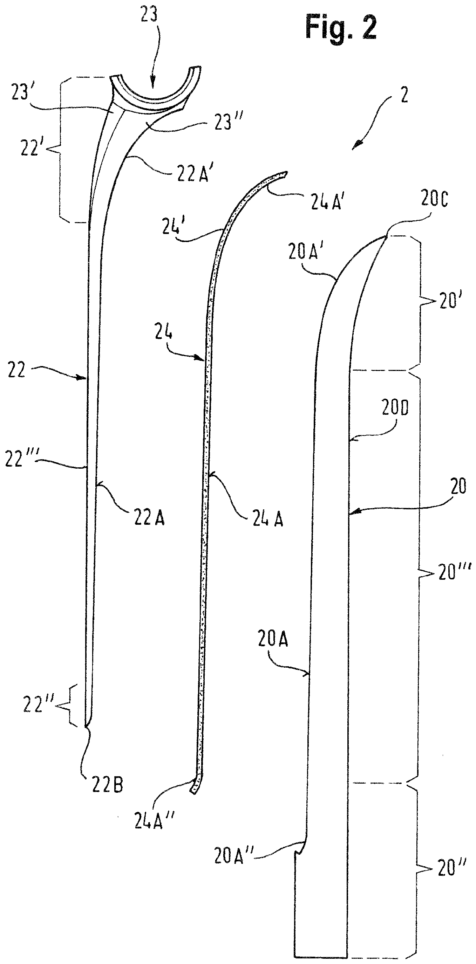

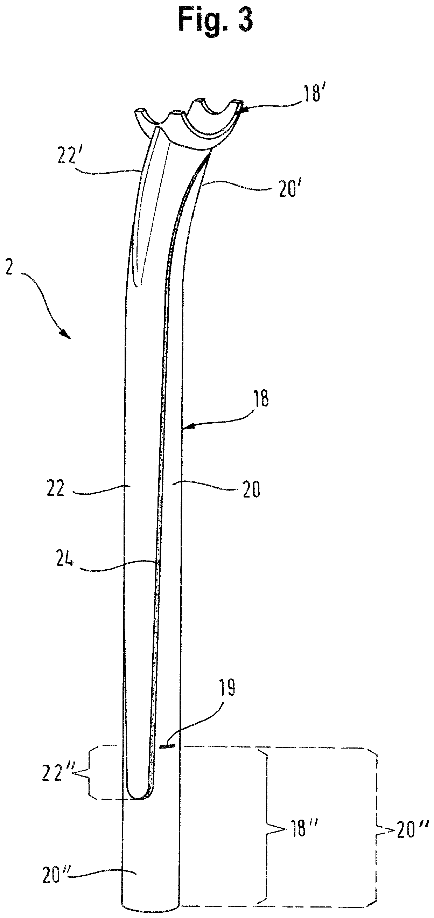

The seat post 18 is designed as a seat post assembly 2 shown in Fig. 3 and in an exploded view in Fig. 2.

The seat post assembly 2 comprises a first seat post member 20 which in the shown example is a rear member of the seat post assembly 2. This first seat post member 20 has a lower end portion 20" having an outer contour, e.g. an outer diameter, which is adapted to the inner contour of seat post receptacle 14. A center portion 20''' of the first seat post member 20 extends upwardly from the lower end portion 20" to an upper end portion 20' of the first seat post member 20. The upper end portion 20' of the first seat post member 20 is bent rearwardly (in Fig. 2 to the right side) so that the upper end tip 20C projects rearwardly over the rear face 20D of the center portion 20''' of the first seat post member 20. The front side of the first seat post member 20 (in Fig. 2 the left side) forms a flattened face side 20A which extends from the upper end tip 20C down to the lower end portion 20'.

The seat post assembly 2 further comprises a second seat post member 22 forming a front seat post member in the shown example. The second seat post member 22 has an upper end portion 22' which is provided with a seat mounting section 23 at its upper free end. The seat mounting section 23 is designed in order to be able to mount a bicycle seat 16 thereto. A person skilled in the art knows the different seat mounting mechanisms and is able to design this seat mounting section 23 as required by the seat to be mounted. A front rib portion 23' and a rear rib portion 23" are provided in the upper end portion 22' of the second seat post member 22 in order to support the seat mounting section 23 and to reinforce the second seat post member 22 in this area.

The second seat post member 22 is also provided with a lower end portion 22" with a lower end 22B at the lower free end of the second seat post member 22. The second seat post member 22 has a flattened face side 22A facing to the rear, i.e. facing to said flattened face side 20A of the first seat post member 22.

A damping member 24 of viscoelastic material is provided between the first seat post member 20 and the second seat post member 22.

As can be seen in Fig. 2 the flattened face side 20A of the first seat post member 20 is curved in the upper end portion 20' in a rearward direction forming a curved upper end portion 20A' of the flattened face side 20A. In the same manner, the damping member 24 which preferably is of constant thickness over its length comprises an upper end portion 24' which is also rearwardly bent with a curvature 24A' adapted to the curvature 20A' of the flattened face side 20A of the first seat post member 20. Furthermore, the rearwardly flattened face side 22A of the second seat post member 22 is rearwardly curved in the upper end portion 22' of the second seat post member wherein the curvature 22A' is adapted to the curvature 24A' of the damping member 24 and the curvature 20A' of the first seat post member 20.

In the same way the flattened face side 20A has a forwardly bent lower end portion 20A". The lower end portion 24A" of damping member 24 is also forwardly bent with a curvature adapted to the curvature of lower end portion 20A".

The first seat post member 20, the damping member 24 and the second seat post member 22 are molded together during the manufacturing process of the seat post assembly 2 in order to obtain the seat post 18 shown in Fig. 3.

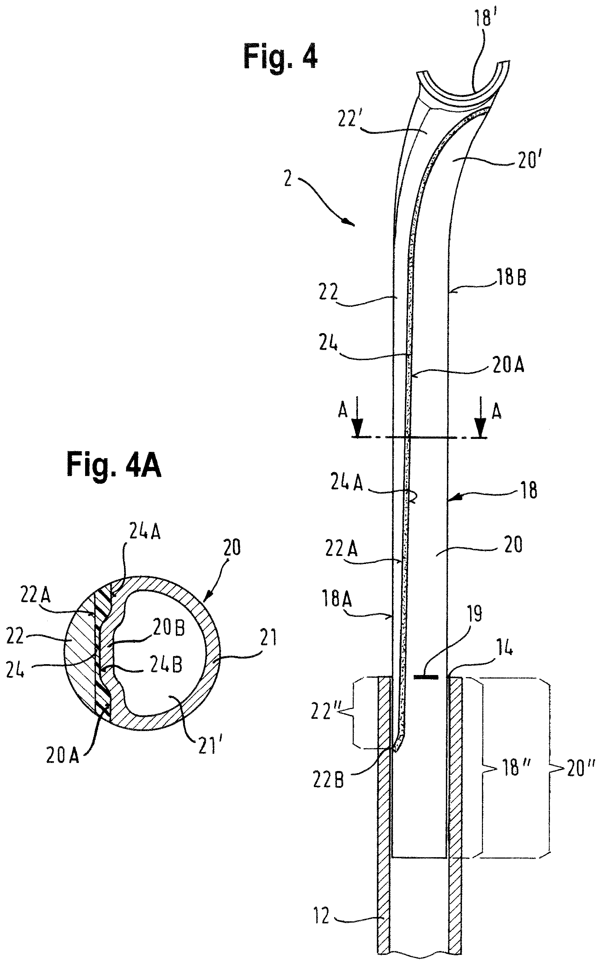

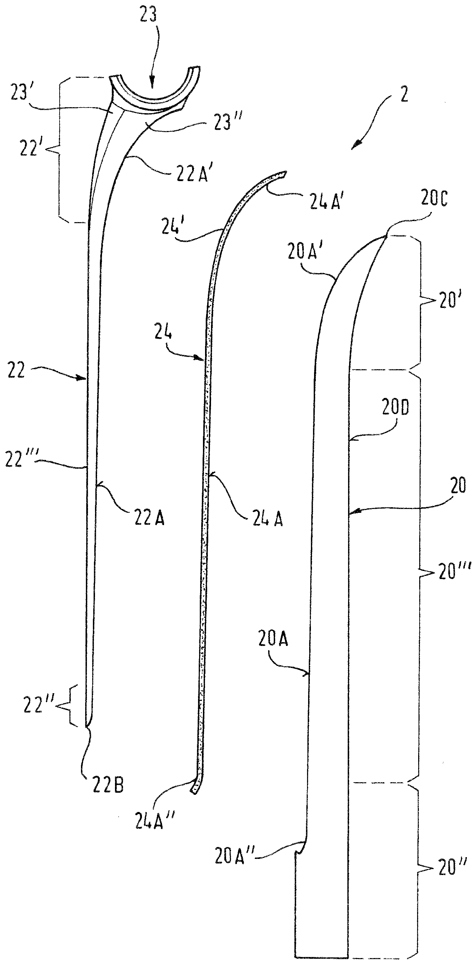

It can be seen in Fig. 3 and also in Fig. 4 that the flattened face side 20A of the first seat post member 20 and the damping member 24 as well as the flattened face side 22A of the second seat post member 22 and the damping member 24 are in respective mutual contact when the molding process of seat post 18 is terminated. The first seat post member 20 and the second seat post member 22 do not directly touch each other as they are separated by the damping member 24.

As can be seen in Fig. 4 the lower end portion 22" of the second seat post member 22 is at its upper end provided with a marking 19 representing the maximum level to which the seat post 18 may been drawn out from the seat tube 12 of the bicycle frame 10. The lower end portion 22' of the second seat post member 22 thus defines the minimum frame mounting section 18" of seat post 18. The lower end portion 22" of the second seat post member 22 extends in the mounted state of the seat post 18 below the marking 19 and is therefore also accommodated within the seat post receptacle 14 of the seat tube 12 when the seat post 18 is mounted to the seat tube 12 of bicycle frame 10.

As can be seen in the cross section of Fig. 4A the first seat post member 20 is formed in its center portion 20''' (and also in its lower end portion 20") as a tube with a cross section defined by a circumferential wall 21 enclosing a hollow space 21'. The hollow space 21' is closed in the upper end portion 20' of the first seat post member 20 by a wall portion defining the flattened face side 20A in this area.

The flattened face side 20A of the first seat post member 20 is provided with an outwardly protruding central rib portion 20B substantially along the longitudinal extension of the flattened face side 20A. Accordingly, the damping member 24 is provided with a first face side 24A facing to said flattened face side 20A of the first seat post member 20 wherein the rearwardly showing first face side 24A of the damping member 24 is provided with a central recess 24B designed to accommodate the central rib portion 20B when the first seat post member 20, the second seat post member 22 and the damping member 24 are mounted together. The central recess 24B therefore also extends substantially along the whole longitudinal extension of the damping member 24.

A bicycle shown in Fig. 1 comprising the seat post assembly as described above and as shown in the drawings with a seat post 18 having a damping member 24 as a viscoelastic layer longitudinally extending from the seat mounting section 18' to the frame mounting section 18" and transversely extending across the seat post 18 has the advantage of an improved shock dissipation during riding this bicycle because the inventive design allows the seat post 18 to have a remarkable deflection under loading.

In order to manufacture the seat post assembly, said first seat post member 20 and said second seat post member 22 are molded in a first step as separate fiber reinforced polymer parts, wherein the fibers are preferably carbon fibers and wherein the polymer is preferably a synthetic resin. Nevertheless, also glass fibers or carbon nanotubes can be used. The molding process is preferably carried out by compression molding, however, also vacuum molding can be applied. The premanufactured first and second seat post members 20, 22 can also be produced from prepregs. In this first production process step the polymer, i.e. the synthetic resin, is not yet cured or at least not yet completely cured. In a second step said premanufactured molded first and second seat post members 20, 22 are placed in a curing fixture with a viscoelastic material layer between said first and said second seat post members 20, 22, wherein said viscoelastic material layer forms said intermediate damping member 24. These three components define a preformed package in said curing fixture. In a third step said preformed package is cured in an oven in order to activate the polymer and to create a chemical bond between the first seat post member 20, the damping member 24 and the second seat post member 22.

The invention, however, is not delimited to these methods. Also, other methods and/or materials can be used to manufacture the seat post assembly according to the invention. For example, injection molded carbon reinforced nylon can be used for mass production of the seat post assembly. Thus, an injection molding step can be carried out as an alternative first manufacturing step instead of compression molding or vacuum molding.

The invention is not limited to the above-described exemplary embodiment(s), which only serve(s) for a general explanation of the core concept of the invention. Rather more, it is within the scope of protection that the seat post assembly in accordance with the invention could also adopt different forms than those of the embodiment(s) described above. In particular thereby, the device and/or method according to the invention may comprise features which represent a combination of the respective individual features of the claims.

The reference symbols and numbers in the claims, the description and the drawings serve only to provide a better understanding of the invention and are not intended to limit the scope of protection.

It is also to be understood that the phraseology and terminology used in this specification is for the purpose of description and should not be regarded as limiting. The use of "including," "comprising," or "having" and variations thereof is meant to encompass the items listed thereafter and equivalence thereof as well as additional items. The terms "connected," "coupled," and "mounted" and variations thereof are used broadly and encompass direct and indirect connections, couplings, and mountings.

### List of Reference Numerals

- 1: bicycle
- 2: seat post assembly
- 10: bicycle frame
- 12: seat tube
- 14: seat post receptacle
- 16: seat
- 18: seat post
- 18': seat mounting section of 18
- 18": frame mounting section of 18
- 18A: first face side of 18
- 18B: second face side of 18
- 19: marking
- 20: first seat post member
- 20': upper end portion of 20
- 20": lower end portion of 20
- 20''': center portion of 20
- 20A: flattened face side of 20
- 20A': curved upper end portion
- 20A": lower end portion
- 20B: central rib portion
- 20C: upper end tip
- 20D: rear face side of 20
- 21: circumferential wall
- 21': hollow space
- 22: second seat post member
- 22': upper end portion of 22
- 22": lower end portion of 22
- 22''': lower end of 22
- 22A: flattened face side of 22
- 22A': curved upper end portion
- 23: seat mounting section
- 23': front rib portion
- 23": rear rib portion
- 24: damping member
- 24A: first face side of 24
- 24A': curved upper end portion of 24
- 24A": lower end portion of 24
- 24B: central recess

## Claims

1. A seat post assembly adapted to couple a seat (16) to a bicycle frame (10), the seat post assembly (2) comprising
a first seat post member (20) having a lower end portion (20") designed to be inserted into a seat post receptacle (14) of said bicycle frame (10);
a second seat post member (22) having an upper end portion (22') designed to be secured to and support said seat (16);
a damping member (24) disposed between said first seat post member (20) and said second seat post member (22);
wherein said first and second seat post members (20, 22) together with said damping member (24) define a seat post (18) with a seat mounting section (18') comprising the upper end portion (22') of said second seat post member (22) and a frame mounting section (18") comprising the lower end portion (20") of said first seat post member (20);
**characterized,**
**in that** said second seat post member (22) is disposed laterally to at least a section of said first seat post member (20) and has a lower end portion (22") which extends into the frame mounting section (18") designed to be inserted into said seat post receptacle (14) of said bicycle frame (10).

2. A seat post assembly according to claim 1,
**characterized,**
**in that** said first seat post member (20) is provided with a flattened face side (20A) facing to said second seat post member (22) in a region of said first seat post member (20) where said first seat post member (20) and said second seat post member (22) are mounted together with said damping member (24) inbetween.

3. A seat post assembly according to claim 2,
**characterized,**
**in that** said flattened face side (20A) longitudinally extends from a first face side (18A) of the seat post (18) at the frame mounting section (18") to an opposite second face side (18B) of the seat post (18) at the upper end portion (20') of the first seat post member (20).

4. A seat post assembly according to claim 2 or 3,
**characterized,**
**in that** said flattened face side (20A) comprises an outwardly protruding central rib portion (20B) substantially along the longitudinal extension of said flattened face side (20A).

5. A seat post assembly according to claim 4,
**characterized,**
**in that** said damping member (24) is provided at a first face side (24A) thereof facing to said flattened face side (20A) of said first seat post member (20) with a central recess (24B) designed to accommodate the central rib portion (20B) when said first seat post member (20), said second seat post member (22) and said damping member (24) are mounted together.

6. A seat post assembly according to one of claims 2 to 5,
**characterized,**
**in that** said second seat post member (22) is provided with a flattened face side (22A) facing to said first seat post member (22) in a region of said second seat post member (22) where said second seat post member (22) and said first seat post member (20) are mounted together with said damping member (24) inbetween.

7. A seat post assembly according to one of the preceding claims,
**characterized,**
**in that** said first seat post member (20) is at least in a portion of its longitudinal extension of tubular cross section defined by a circumferential wall (21) enclosing a hollow space (21').

8. A seat post assembly according to claim 7,
**characterized,**
**in that** the lower end portion (20") of said first seat post member (20) is of tubular cross section.

9. A seat post assembly according to claim 7 or 8,
**characterized,**
**in that** a center portion (20''') of said first seat post member (20) is of tubular cross section.

10. A seat post assembly according to one of the preceding claims,
**characterized,**
**in that** said first seat post member (20) and/or said second seat post member (22) comprise or are made of a fiber-reinforced composite.

11. A seat post assembly according to claim 10,
**characterized,**
**in that** said fiber-reinforced composite comprises glass fibers and/or carbon fibers bound together in a resin matrix.

12. A seat post assembly according to one of the preceding claims,
**characterized,**
**in that** the upper end of the frame mounting section (18") of the seat post (18) is marked by a marking (19) provided on the seat post (18) above the lower end (22''') of the second seat post member (22).

13. A bicycle comprising a seat post assembly (2) according to one of the preceding claims,
**characterized,**
**in that** said frame mounting section (18") of said seat post (18) is completely accommodated within said seat post receptacle (14) formed at the upper end portion of the seat tube (12) of said bicycle frame (10) so that the lower end portion (22") of said second seat post member (22) terminates inside said seat post receptacle (14) of said seat tube (12).

14. A bicycle according to claim 13,
**characterized,**
**in that** the seat post (18) is provided with a marking (19) according to claim 12 wherein said seat post (18) does not extend with said marking (19) out of the seat post receptacle (14) of the seat tube (12).

15. A method of manufacturing a seat post assembly according to one of the claims 1 to 12,
**characterized by** the steps of
(a) molding said first seat post member (20) and said second seat post member (22) as separate fiber reinforced polymer parts, in particular carbon fiber reinforced polymer parts, preferably by compression molding;
(b) positioning said molded first seat post member (20) and said molded second seat post member (22) with said damping member (24) of viscoelastic material inbetween as a preformed package in a curing fixture and
(c) curing said preformed package in an oven in order to activate the polymer and to create a chemical bond between the first seat post member (20), the damping member (24) and the second seat post member (22).
